# EUROPEAN PATENT APPLICATION

(11) **EP 4 376 144 A1**
(43) Date of publication of application: **29.05.2024**
(21) Application number: 23209670.1
(22) Date of filing: 14.11.2023
(51) Int. Cl.: H01M 10/04, H01M 50/109, H01M 50/153, H01M 50/169, H01M 50/184, H01M 50/186

(54) **BUTTON CELL**

(30) Priority: 23.11.2022 KR 20220158688
(71) Applicant: Samsung SDI Co., Ltd., Yongin-si, Gyeonggi-do 17084 (KR)
(72) Inventor: Kim, Jongwan, 17084 Yongin-si, Gyeonggi-do (KR)
(74) Representative: Gulde & Partner

(57) **Abstract**

A button cell includes: an electrode assembly configured to include a first electrode, a second electrode, and a separator; a case connected to the first electrode and configured to accommodate the electrode assembly and to include an opening exposing the electrode assembly;; a cap plate coupled to the case to cover an outer area of the opening and configured to include a through hole exposing a central area of the opening; a terminal plate connected to the second electrode, to be insulatively bonded to the cap plate, and to cover the through hole; an annular welded portion configured to weld between an edge of the cap plate and a sidewall of the case; and an annular gasket positioned inside the case to correspond to the annular welded portion and positioned between the electrode assembly and the edge of the cap plate and between the electrode assembly and a sidewall of the case.

## Description

### BACKGROUND

### (a) Field

The present disclosure relates to a button cell.

### (b) Description of the Related Art

In general, a rechargeable battery is a battery that can be charged and discharged.

Recently, as a demand for wearable devices such as headphones, earphones, smartwatches, and body-attached medical devices using wireless communication such as Bluetooth increases, a need for a button cell, which is a micro-sized rechargeable battery mounted in a wearable device, is increasing.

Such a conventional button cell includes an electrode assembly including positive electrodes and a separator positioned between the positive electrodes, a case accommodating the electrode assembly, a cap plate welded to the case, and a terminal plate insulated and bonded to the cap plate.

However, in the conventional button cell, when welding between the case including the electrode assembly and the cap plate during a manufacturing process of the button cell, the separator of the electrode assembly is melted by welding heat, causing a short circuit between opposite electrodes of the electrode assembly.

The above information disclosed in this Background section is only for enhancement of understanding of the background of the invention, and therefore, it may contain information that does not form the prior art that is already known in this country to a person of ordinary skill in the art.

### SUMMARY

An embodiment has been made in an effort to provide a button cell including an annular gasket that suppresses a movement of an electrode assembly while suppressing melting of a separator of the electrode assembly due to welding heat welding between a case and a cap plate.

In addition, an embodiment has been made in an effort to provide a button cell in which it is easy to accommodate the electrode assembly inside the case and battery capacity deterioration is minimized even when a ring gasket is included to suppress a movement of the electrode assembly while suppressing melting of the separator of the electrode assembly due to welding heat used for welding between the case and the cap plate.

An aspect of the present disclosure provides a button cell including an electrode assembly configured to include a first electrode, a second electrode, and a separator positioned between the first electrode and the second electrode, a case connected to the first electrode and configured to accommodate the electrode assembly and to include an opening exposing the electrode assembly, a cap plate coupled to the case to cover an outer area of the opening and configured to include a through hole exposing a central area of the opening, a terminal plate connected to the second electrode to be insulatively bonded to the cap plate, and to cover the through hole, an annular welded portion configured to weld between an edge of the cap plate and a sidewall of the case, and an annular gasket positioned inside the case to correspond to the annular welded portion and positioned between the electrode assembly and the edge of the cap plate and between the electrode assembly and a sidewall of the case, wherein the annular gasket includes a plurality of cut portions positioned to be spaced apart from each other along an inner edge thereof.

Each of the cut portions of the annular gasket may have a triangular shape.

The annular gasket may further include a first extension positioned between an upper surface of the electrode assembly and the edge of the cap plate, and a second extension configured to extend from the first extension and positioned between a side surface of the electrode assembly and the sidewall of the case.

The cut portions may be positioned on the first extension.

The second extension may be thinner than the first extension.

The second extension may be shorter than the first extension.

The electrode assembly may be wound around a vertical line to have a jelly roll shape, and the first electrode may protrude closer to the cap plate than the second electrode in a direction of the vertical line.

The second extension may overlap the first electrode in a horizontal direction intersecting the vertical line and may not overlap the second electrode.

The first electrode may be an anode, and the second electrode may be a cathode.

It may further include an insulating washer positioned between the annular gasket and the cap plate.

The insulating washer may be positioned over an entire rear surface of the cap plate.

It may further include a bonding layer disposed between the cap plate and the terminal plate to insulatively bond between the cap plate and the terminal plate.

The terminal plate may include a flange portion configured to cover the through hole and to contact the bonding layer, and a protrusion configured to penetrate the through hole from the flange portion.

The electrode assembly may include a first electrode tab configured to extend from the first electrode to be welded to the case, and a second electrode tab configured to extend from the second electrode to be welded to the protrusion of the terminal plate.

The case and the cap plate may have same polarity as that of the first electrode, and the terminal plate may have the same polarity as that of the second electrode.

A ratio (height/diameter) of a height to a diameter of the button cell may be 1 or less, preferably less than 0,9.

According to an embodiment, it is possible to provide a button cell including an annular gasket that suppresses a movement of an electrode assembly while suppressing melting of a separator of the electrode assembly due to welding heat welding between a case and a cap plate.

In addition, it is possible to provide a button cell in which it is easy to accommodate the electrode assembly inside the case and battery capacity deterioration is minimized even when a ring gasket is included to suppress a movement of the electrode assembly while suppressing melting of the separator of the electrode assembly due to welding heat used for welding between the case and the cap plate.

### BRIEF DESCRIPTION OF THE DRAWINGS

FIG. 1 illustrates a perspective view showing a button cell according to an embodiment.
FIG. 2 illustrates a cross-sectional view taken along a line II-II of FIG. 1.
FIG. 3 illustrates an enlarged view of a region A of FIG. 2.
FIG. 4 illustrates a top plan view showing a annular gasket of a button cell according to an embodiment.
FIG. 5 illustrates a cross-sectional view taken along a line V-V of FIG. 4.
FIG. 6 illustrates a cross-sectional view showing a button cell according to another embodiment.
FIG. 7 illustrates an enlarged view of a region B in FIG. 6.
FIG. 8 illustrates a cross-sectional view showing a button cell according to another embodiment.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention.

In addition, unless explicitly described to the contrary, the word "comprise" and variations such as "comprises" or "comprising" will be understood to imply the inclusion of stated elements but not the exclusion of any other elements.

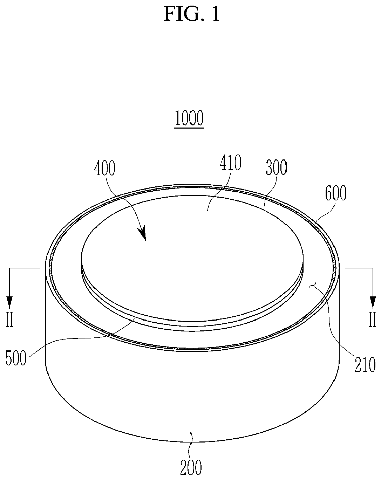

Hereinafter, a button cell according to an embodiment will be described with reference to FIG. 1 to FIG. 5.

A button cell according to an embodiment, which is a micro secondary battery, may include a coin cell, but the present disclosure is not limited thereto, and may include a cylindrical or pin-type battery.

Herein, the button cell, which is a battery in the form of a thin coin or button, may indicate a battery having a height-to-diameter ratio (height/diameter) of 1 or less, but the present disclosure is not limited thereto. The button cell is mainly cylindrical, so a horizontal cross-section thereof is circular, but the present invention is not limited thereto, and the horizontal cross-section may have an oval or polygonal shape. In this case, a diameter may indicate a maximum distance based on a horizontal direction of the battery, and a height may indicate a maximum distance (distance from a flat bottom surface to a flat top surface) based on a vertical direction of the battery.

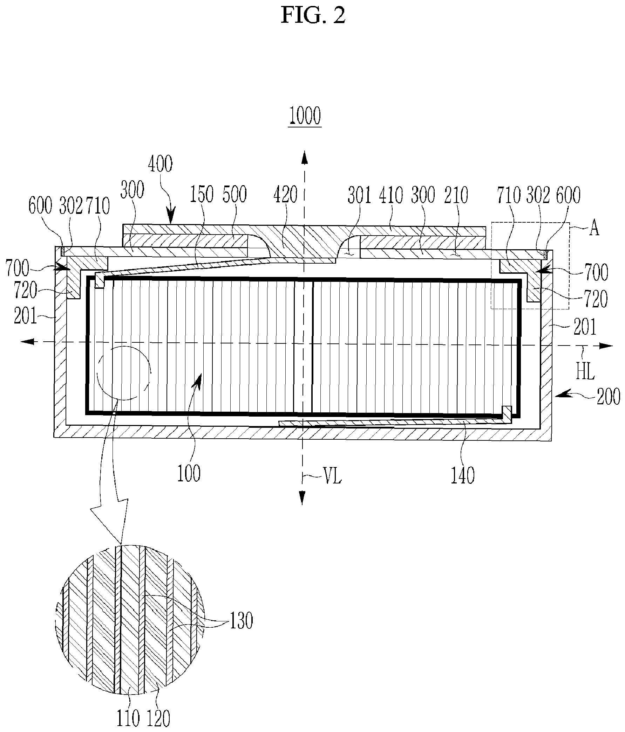

FIG. 1 illustrates a perspective view showing a button cell according to an embodiment. FIG. 2 illustrates a cross-sectional view taken along a line II-II of FIG. 1.

Referring to FIG. 1 to FIG. 2, a button cell 1000 according to an embodiment, which is a rechargeable battery capable of charging and discharging, includes an electrode assembly 100, a case 200, a cap plate 300, a terminal plate 400, a bonding layer 500, an annular weld portion 600, and an annular gasket 700.

The electrode assembly 100 is accommodated in the case 200. A lower portion of the electrode assembly 100 faces a bottom portion of the case 200, and an upper portion of the electrode assembly 100 faces the terminal plate 400 and the cap plate 300 covering an opening 210 of the case 200. Upper and lower portions of the electrode assembly 100 may have planes parallel to each other, but the present disclosure is not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and a separator 130 including an insulating material is positioned between the first electrode 110 and the second electrode 120. The first electrode 110 may be an anode, and the second electrode 120 may be a cathode, but the present disclosure is not limited thereto, and the first electrode 110 may be the cathode and the second electrode 120 may be the anode.

The first electrode 110 has a band shape extending in a direction, and includes an anode coated region, which is an area where an anode active material layer is applied to a current collector of a metal foil (e.g., a Cu foil), and an anode uncoated region, which is a region where no active material is applied. The anode uncoated region may be positioned at an end of the first electrode 110 in an extension direction.

The second electrode 120 has a band shape extending in a direction while being spaced apart from the first electrode 110 with the separator 130 provided therebetween, and includes a cathode coated region, which is a region where a cathode active material layer is applied to a current collector of a metal foil (e.g., an Al foil), and a cathode uncoated region, which is a region where no active material is applied. The cathode uncoated region may be positioned at an end of the second electrode 120 in an extension direction.

The separator 130 extends in a direction between the first electrode 110 and the second electrode 120 to prevent a short circuit between the first electrode 110 and the second electrode 120.

The first electrode 110, the separator 130, and the second electrode 120 are sequentially stacked and wound to have a jelly roll shape with one vertical line VL as a center thereof, but the present disclosure is not limited thereto, and they may be formed in various known shapes. Herein, one vertical line VL includes, but is not limited to, a virtual vertical line passing through a center of the terminal plate 400 in a vertical direction.

The first electrode 110 protrudes closer to the cap plate 300 and the bottom portion of the case 200 than the second electrode 120 in the direction of the vertical line VL in a state of being wound in a form of a jelly roll around one vertical line VL. When the first electrode 110 protrudes closer to the bottom portion of the cap plate 300 and the case 200 than the second electrode 120, to suppress a short circuit between the cap plate 300 and the case 200 electrically connected to the first electrode 110 and the second electrode 120 of the electrode assembly 100. Each of the first electrode 110, the second electrode 120, and the separator 130 may include various known materials.

The first electrode tab 140 extends from the first electrode 110 of the electrode assembly 100 to the case 200. The first electrode tab 140 is coupled to the bottom portion of the case 200 to connect the first electrode 110 and the case 200. The first electrode tab 140 is in contact with the first electrode 110 and the case 200. The first electrode tab 140 may be welded to the bottom portion of the case 200, but the present disclosure is not limited thereto, and the first electrode tab 140 may be in contact with the bottom portion of the case 200. The case 200 and the cap plate 300 have a same polarity as that of the first electrode 110 by the first electrode tab 140.

The second electrode tab 150 extends from the second electrode 120 of the electrode assembly 100 to the terminal plate 400. The second electrode tab 150 is coupled to a protrusion 420 of the terminal plate 400 to connect the second electrode 120 and the terminal plate 400. The second electrode tab 150 is in contact with the second electrode 120 and the terminal plate 400. The second electrode tab 150 may be welded to a surface of the protrusion 420 of the terminal plate 400, but the present disclosure is not limited thereto, and may come into contact with the surface of the protrusion 420. The terminal plate 400 has a same polarity as that of the second electrode 120 by the second electrode tab 150.

Meanwhile, a center pin penetrating a center of the electrode assembly 100 in a vertical direction may be positioned at a central portion of the electrode assembly 100, and the center pin may support the first electrode tab 140 and the second electrode tab 150, but the present disclosure is not limited thereto.

The case 200 is connected to the first electrode 110 of the electrode assembly 100 to accommodate the electrode assembly 100. The case 200 includes an opening 210 exposing the upper portion of the electrode assembly 100. As the bottom portion of the case 200 is welded to the first electrode tab 140 to be connected to the first electrode 110 of the electrode assembly 100, the case 200 has a same polarity as that of the first electrode 110. The case 200 has a cylindrical can shape for accommodating the electrode assembly 100 having a form of a jelly roll, but the present disclosure is not limited thereto, and may have various known shapes. The case 200 may accommodate various known electrolyte solutions together with the electrode assembly 100. An outer surface of the case 200 and an outer surface of the cap plate 300 may be a first electrode terminal of the button cell 1000, but the present disclosure is not limited thereto. In this case, an upper surface of a flange portion 410, which is an outer surface of the terminal plate 400, may be a second electrode terminal of the button cell 1000, but the present disclosure is not limited thereto. Meanwhile, a plating layer may be coated on the outer surface of the case 200, but the present disclosure is not limited thereto, and various well-known coating layers may be coated on the outer surface of the case 200. The case 200 may include stainless steel, but the present disclosure is not limited thereto, and may include various known metals.

The opening 210 of the case 200 is covered by the cap plate 300 and the terminal plate 400.

The cap plate 300 is coupled to the case 200 to cover an outer area of the opening 210. The cap plate 300 includes a through hole 301 exposing a central area of the opening 210. An edge 302 of the cap plate 300 is directly coupled to a sidewall 201 of the case 200 forming the opening 210 of the case 200 by an annular welded portion 600 by a welding process, thereby covering an outer area of the opening 210. The cap plate 300 has a ring shape by the through-hole 301 formed in the center, but the present disclosure is not limited thereto. The cap plate 300 is coupled to the case 200 by the annular welded portion 600 to have same polarity as that of the first electrode 110. Accordingly, the cap plate 300 and the case 200 have the same polarity as that of the first electrode 110. The outer surface of the cap plate 300 may be a first electrode terminal of the button cell 1000, but the present disclosure is not limited thereto. The cap plate 300 is insulated from and bonded to the terminal plate 400 with the bonding layer 500 provided therebetween. The cap plate 300 includes stainless steel, but the present disclosure is not limited thereto, and may include various known metals.

The terminal plate 400 is connected to the second electrode 120 to be insulated from and bonded to the cap plate 300 by the bonding layer 500. The terminal plate 400 covers the through hole 301 of the cap plate 300. The terminal plate 400 is positioned on the cap plate 300. The terminal plate 400 covers a central area of the opening 210 of the case 200 exposed by the through hole 301 of the cap plate 300. Since the plate 400 covers the central area of the opening 210 and the cap plate 300 covers an outer area of the opening 210, the opening 210 of the case 200 is completely covered by the terminal plate 400 and the cap plate 300. The terminal plate 400 firmly seals the electrode assembly 100 together with the case 200, the cap plate 300, and the bonding layer 500. The terminal plate 400 is coupled to the second electrode tab 150 of the electrode assembly 100 to be connected to the second electrode 120 of the electrode assembly 100. The terminal plate 400 has same polarity as that of the second electrode 120.

The terminal plate 400 includes a flange portion 410 and a protrusion 420.

The flange portion 410 is positioned on the cap plate 300, and overlaps the cap plate 300 to cover the through hole 301. The flange portion 410 has a larger area than that of the protrusion 420. The flange portion 410 may have a larger diameter than that of the protrusion 420. The flange portion 410 has a thinner thickness than that of the protrusion 420, but the present disclosure is not limited thereto. A rear surface of the flange portion 410 contacts the bonding layer 500, and the flange portion 410 is insulatively bonded to the cap plate 300 by the bonding layer 500. A front surface of the flange portion 410 may be a second electrode terminal of the button cell 1000.

The protrusion 420 protrudes from the flange portion 410 to extend through the through hole 301. The protrusion 420 is connected to the second electrode 120 through the through hole 301 from the flange portion 410. A surface of the protrusion 420 is coupled to the second electrode tab 150. The surface of the protrusion 420 may be welded to the second electrode tab 150, but the present disclosure is not limited thereto. As the protrusion 420 is coupled to the second electrode tab 150, the protrusion 420 and the flange portion 410 of the terminal plate 400 have same polarity as that of the second electrode 120. The surface of the protrusion 420 coupled with the second electrode tab 150 may have a smaller diameter than that of a front surface of the flange portion 410, which may be an electrode terminal. The protrusion 420 and the flange portion 410 are integrally formed using a forging process, but the present disclosure is not limited thereto, and different materials may be combined to form the terminal plate 400.

A plating layer may be coated on the outer surface of the terminal plate 400, but the present disclosure is not limited thereto, and various known coating layers may be coated on the outer surface of the terminal plate 400. The terminal plate 400 includes aluminum, but the present disclosure is not limited thereto, and may include various known metals.

The bonding layer 500 is positioned between the cap plate 300 and the flange portion 410 of the terminal plate 400. The bonding layer 500 insulates and bonds between the cap plate 300 and the terminal plate 400. The bonding layer 500 includes an insulating material and insulates between the cap plate 300 and the terminal plate 400. The bonding layer 500 is thermally fused between the cap plate 300 and the flange portion 410 of the terminal plate 400 by using heat or a laser beam. The bonding layer 500 includes, but is not limited to, polypropylene, polyimide, etc., and may include various known resins for insulating bonding between the cap plate 300 and the terminal plate 400. As the bonding layer 500 bonds between the cap plate 300 and the terminal plate 400, the opening 210 of the case 200 in which the electrode assembly 100 is accommodated is completely sealed by the cap plate 300, the terminal plate 400, and the bonding layer 500. In a state where the terminal plate 400 is bonded to the cap plate 300 by the bonding layer 500, the cap plate 300 is welded to the case 200 in which the electrode assembly 100 is accommodated, so that the case 200 and the cap plate 300 may be welded by the annular welded portion 600.

For example, the bonding layer 500 may include a thermosetting resin and a thermoplastic resin. The thermosetting resin and the thermoplastic resin of the bonding layer 500 may be stacked to include a plurality of layers, but the prevent disclosure is not limited thereto. The thermosetting resin of the bonding layer 500 is in a state that is cured by heat, and may include various known thermosetting resins such as a phenol resin, a urea resin, a melamine resin, an epoxy resin, and a polyester resin. The thermoplastic resin of the bonding layer 500 includes, but is not limited to, a polypropylene resin that melts at a predetermined temperature, and may include various known thermoplastic resins such as polystyrene, polyethylene, and a polyvinyl chloride resin.

The annular welded portion 600 welds and couples the cap plate 300 and the case 200. The annular welded portion 600 welds between the edge 302 of the cap plate 300 and the sidewall 201 of the case 200. The annular welded portion 600 is formed between the edge 302 of the cap plate 300 and the sidewall 201 of the case 200 by using a welding means such as a laser beam. The annular welded portion 600 has a circular ring shape along a planar shape of the edge 302 of the cap plate 300 and the sidewall 201 of the case 200, but the present disclosure is not limited thereto, and corresponding to the planar shapes of the edge 302 of the cap plate 300 and the sidewall 201 of the case 200, it may have various ring shapes such as a polygonal shape, an elliptical shape, or a closed loop shape.

The annular welded portion 600 is formed by a welding process, and when the annular welded portion 600 is formed, welding heat is generated in the annular welded portion 600. In order to prevent the separator 130 of the electrode assembly 100 accommodated inside the case 200 from being melted by such welding heat, corresponding to the annular welded portion 600, the annular gasket 700 is positioned between the electrode assembly 100 and the case 200 inside the case 200.

The annular gasket 700 is positioned inside the case 200 corresponding to the annular welded portion 600. The annular gasket 700 has a circular annular shape corresponding to the annular welded portion 600 in a plan view. The annular gasket 700 is positioned between the electrode assembly 100 and the edge 302 of the cap plate 300 and between the electrode assembly 100 and the sidewall 201 of the case 200. The annular gasket 700 is positioned to correspond to a corner between upper and side surfaces of the electrode assembly 100 corresponding to the annular welded portion 600. The annular gasket 700 is positioned between the corner of the electrode assembly 100 and the annular welded portion 600 inside the case 200. The annular gasket 700 may include various known insulating materials such as polypropylene and polyimide, which have lower thermal conductivity than the case 200 and the cap plate 300.

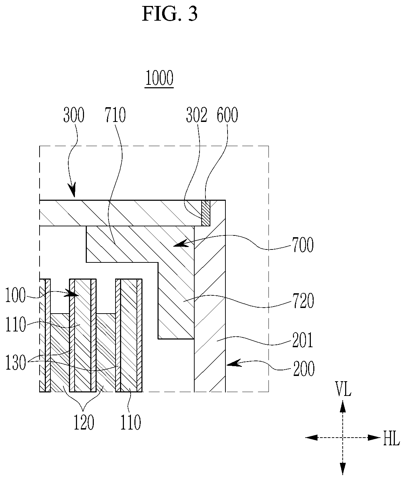

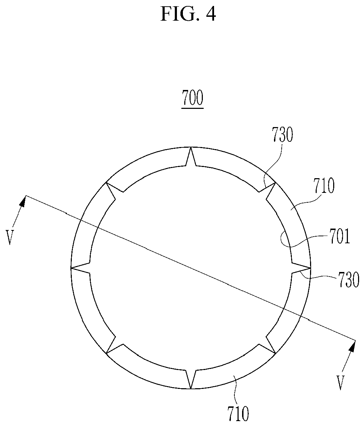

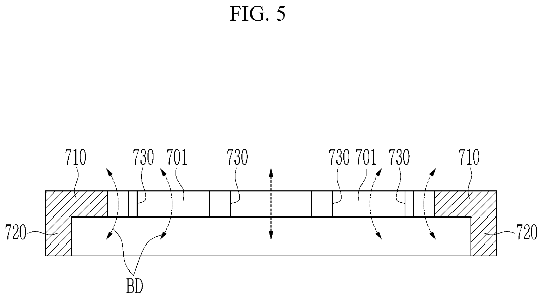

FIG. 3 illustrates an enlarged view of a region A of FIG. 2. FIG. 4 illustrates a top plan view showing an annular gasket of a button cell according to an embodiment. FIG. 5 illustrates a cross-sectional view taken along a line V-V of FIG. 4.

Referring to FIG. 3 to FIG. 5, the annular gasket 700 includes a first extension 710, a second extension 720, and a plurality of cut portions 730.

The first extension 710 is positioned between an upper surface of the electrode assembly 100 and the edge 302 of the cap plate 300. The first extension 710 extends along one horizontal line HL intersecting one vertical line VL to be positioned between the electrode assembly 100 and the cap plate 300.

The second extension 720 is curved and extended in the vertical direction from the first extension 710 extending in the horizontal direction. The second extension 720 is positioned between the sidewall 201 of the case 200 and the side surface of the electrode assembly 100. The second extension 720 extends along one vertical line VL to be positioned between the electrode assembly 100 and the case 200.

Referring to FIG. 4 and FIG. 5, the cut portions 730 are spaced apart from each other along the inner edge 701 of the annular gasket 700. The cut portions 730 are positioned on the first extension 710 and are spaced apart from each other along the first extension 710 extending in an annular shape in a plan view. The cut portions 730 are cut portions, and each of the cut portions 730 has a triangular shape in a plan view.

Referring to FIG. 5, cut portions 730 are positioned spaced apart from each other along the inner edge 701 of the first extension 710 of the annular gasket 700, the first extension 710 of the annular gasket 700 is easily bent (BD) in the vertical direction.

Referring to FIG. 5 and FIG. 2, as the first extension 710 of the annular gasket 700 is easily bent (BD) in the vertical direction, when the electrode assembly 100 is accommodated into the case 200 through the opening 210 of the case 200 during a manufacturing process of the button cell 1000, even when the first extension 710 of the annular gasket 700 interferes with the electrode assembly 100, the first extension 710 of the annular gasket 700 is bent along the moving direction of the electrode assembly 100, so that the electrode assembly 100 is easily accommodated inside the case 200 through the opening 210.

In addition, as the first extension 710 of the annular gasket 700 is easily bent (BD) in the vertical direction, when welding the second electrode tab 150 to the protrusion 420 of the terminal plate 400 during the manufacturing process of the button cell 1000, even when the first extension 710 of the annular gasket 700 interferes with the second electrode tab 150, the first extension 710 of the annular gasket 700 is bent along the moving direction of the second electrode tab 150, so that the second electrode tab 150 is easily welded to the protrusion 420 of the terminal plate 400 through the opening 210.

As such, in the button cell 1000 according to an embodiment, the annular gasket 700 is positioned between the electrode assembly 100 and the edge 302 of the cap plate 300 and between the electrode assembly 100 and the sidewall 201 of the case 200 inside the case 200 to correspond to the annular welded portion 600, and thus when the annular welded portion 600 is formed between the sidewall 201 of the case 200 and the edge 302 of the cap plate 300 by a welding process for coupling the case 200 and the cap plate 300, since welding heat generated in the annular welded portion 600 is blocked by the annular gasket 700, a short circuit between the first electrode 110 and the second electrode 120 is prevented by preventing the separator 130 of the electrode assembly 100 accommodated inside the case 200 from being melted by welding heat.

In addition, in the button cell 1000 according to an embodiment, the annular gasket 700 is positioned between the electrode assembly 100 and the edge 302 of the cap plate 300 and between the electrode assembly 100 and the sidewall 201 of the case 200 inside the case 200 to correspond to the annular welded portion 600, and when the annular gasket 700 contacts and supports a corner between upper and side surfaces of the electrode assembly 100, damage to each of the first electrode 110, the second electrode 120, the separator 130, the first electrode tab 140, and the second electrode tab 150 of the electrode assembly 100 is suppressed by an impact applied to the electrode assembly 100 by suppressing up and down movement and left and right movement of the electrode assembly 100.

That is, the button cell 1000 including the annular gasket 700 that not only suppresses melting of the separator 130 of the electrode assembly 100 due to welding heat between the case 200 and the cap plate 300, but also suppresses the movement of the electrode assembly 100, is provided.

In addition, in the button cell 1000 according to an embodiment, the first extension 710 of the annular gasket 700 is easily bent (BD) in the vertical direction by the cut portions 730, and when the electrode assembly 100 is accommodated into the case 200 through the opening 210 of the case 200 during a manufacturing process of the button cell 1000, even when the first extension 710 of the annular gasket 700 interferes with the electrode assembly 100, the first extension 710 of the annular gasket 700 is bent along the moving direction of the electrode assembly 100, so that the electrode assembly 100 is easily accommodated inside the case 200 through the opening 210.

In addition, in the button cell 1000 according to an embodiment, as the first extension 710 of the annular gasket 700 is easily bent (BD) in the vertical direction, when welding the second electrode tab 150 to the protrusion 420 of the terminal plate 400 during the manufacturing process of the button cell 1000, even when the first extension 710 of the annular gasket 700 interferes with the second electrode tab 150, the first extension 710 of the annular gasket 700 is bent along the moving direction of the second electrode tab 150, so that the second electrode tab 150 is easily welded to the protrusion 420 of the terminal plate 400 through the opening 210.

That is, the button cell 1000 in which it is easy to accommodate the electrode assembly 100 into the case 200 even when including the annular gasket 700 that not only suppresses melting of the separator 130 of the electrode assembly 100 due to welding heat between the case 200 and the cap plate 300, also suppresses the movement of the electrode assembly 100.

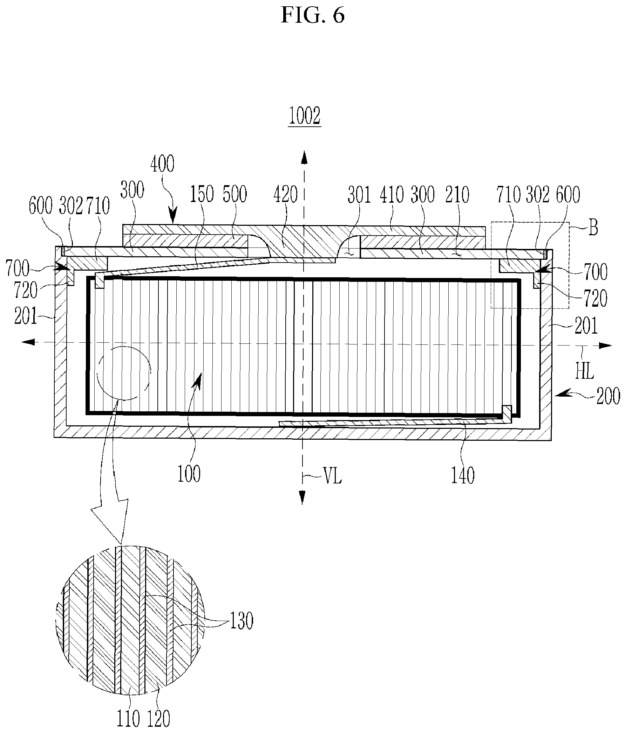

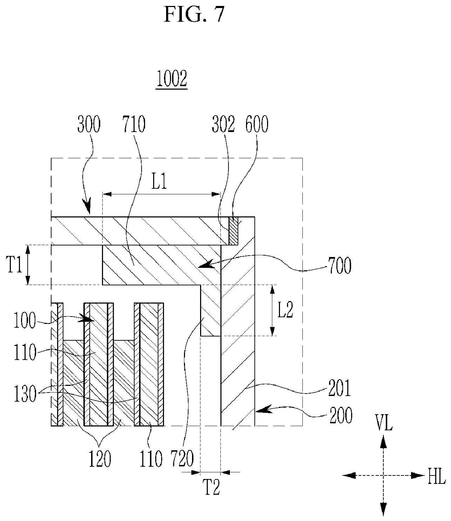

Hereinafter, a button cell according to another exemplary embodiment will be described with reference to FIG. 6 and FIG. 7.

Hereinafter, a button cell according to another embodiment will be described in different points from the button cell according to the above-described embodiment.

FIG. 6 illustrates a cross-sectional view showing a button cell according to another embodiment. FIG. 7 illustrates an enlarged view of a region B in FIG. 6.

Referring to FIG. 6 and FIG. 7, an annular gasket 700 of a button cell 1002 according to another embodiment includes a first extension 710, a second extension 720, and a plurality of cut portions. Herein, the cut portions may have same positions and shapes as those of the plurality of cut portions of the annular gasket 700 according to the above-described embodiment.

The first extension 710 is positioned between an upper surface of the electrode assembly 100 and the edge 302 of the cap plate 300. The first extension 710 extends along one horizontal line HL intersecting one vertical line VL to be positioned between the electrode assembly 100 and the cap plate 300.

The second extension 720 is curved and extended in the vertical direction from the first extension 710 extending in the horizontal direction. The second extension 720 is positioned between the sidewall 201 of the case 200 and the side surface of the electrode assembly 100. The second extension 720 extends along one vertical line VL to be positioned between the electrode assembly 100 and the case 200.

The second extension 720 has a thinner thickness than that of the first extension 710 and a shorter length than that of the first extension 710. Specifically, a second thickness T2 of the second extension 720 is thinner than a first thickness T1 of the first extension 710, and a second length L2 of the second extension 720 is shorter than a first length L1 of the first extension 710. The first thickness T1 may be a thickness measured from the bottom of the cap plate 300 to the bottom of the first extension 710. The second thickness T2 may be a thickness measured from the sidewall 201 of the case 200 to a side end of the second extension 720. The side end of the second extension 720 may be an end of the second extension 720 positioned farthest from the sidewall 201 of the case 200. The first length L1 may be the length of a part of the first extension 710 perpendicular to the first thickness T1. The second length L2 may be the length of a part of the second extension 720 perpendicular to the second thickness T2.

The second extension 720 overlaps the first electrode 110 as an anode in the direction of one horizontal line HL intersecting one vertical line VL, and does not overlap the second electrode 120 which is a cathode. The second extension 720 overlaps only the first electrode 110. When the annular gasket 700 contacts the electrode assembly 100, the second extension 720 only contacts the first electrode 110, and the second extension 720 does not contact the second electrode 120.

As such, the button cell 1002 including the annular gasket 700 that not only suppresses melting of the separator 130 of the electrode assembly 100 due to welding heat between the case 200 and the cap plate 300, but also suppresses the movement of the electrode assembly 100.

In addition, in the button cell 1002 according to another embodiment, the first extension 710 of the annular gasket 700 is easily bent in the vertical direction by the cut portions, when the electrode assembly 100 is accommodated into the case 200 through the opening 210 of the case 200 during a manufacturing process of the button cell 1002, even when the first extension 710 of the annular gasket 700 interferes with the electrode assembly 100, the first extension 710 of the annular gasket 700 is bent along the moving direction of the electrode assembly 100, so that the electrode assembly 100 is easily accommodated inside the case 200 through the opening 210.

In addition, in the button cell 1002 according to another embodiment, as the first extension 710 of the annular gasket 700 is easily bent in the vertical direction, when welding the second electrode tab 150 to the protrusion 420 of the terminal plate 400 during the manufacturing process of the button cell 1002, even when the first extension 710 of the annular gasket 700 interferes with the second electrode tab 150, the first extension 710 of the annular gasket 700 is bent along the moving direction of the second electrode tab 150, so that the second electrode tab 150 is easily welded to the protrusion 420 of the terminal plate 400 through the opening 210.

In addition, in the button cell 1002 according to another embodiment, the second extension 720 of the annular gasket 700 is not only thinner than the first extension 710 and shorter in length than the first extension 710 but also overlaps the first electrode 110, which is an anode, in the direction of one horizontal line HL and does not overlap with the second electrode 120, which is a cathode, in the direction of one horizontal line HL, thereby minimizing a decrease in battery capacity due to a space where the annular gasket 700 is positioned.

That is, the button cell 1002 in which it is easy to accommodate the electrode assembly 100 into the case 200 even when including the annular gasket 700 that not only suppresses melting of the separator 130 of the electrode assembly 100 due to welding heat between the case 200 and the cap plate 300, but also suppresses the movement of the electrode assembly 100, and minimizes battery capacity deterioration is provided.

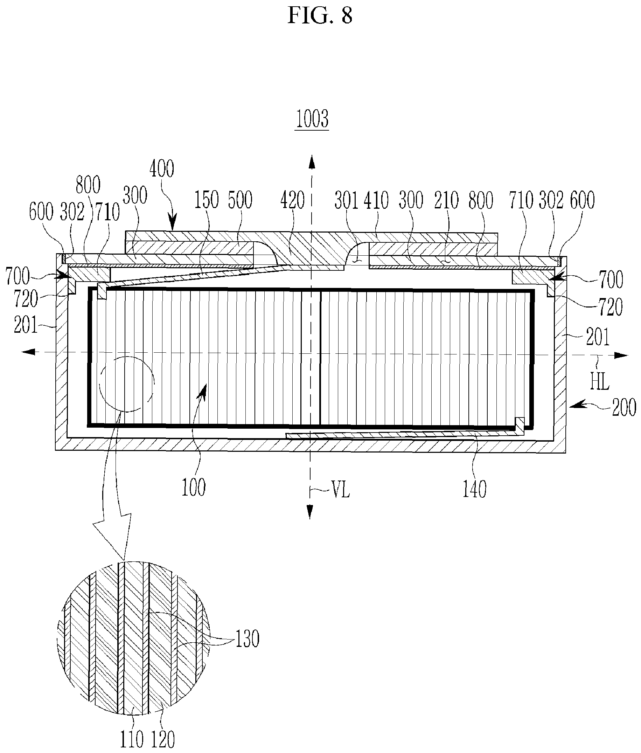

Hereinafter, a button cell according to another embodiment will be described with reference to FIG. 8.

Hereinafter, a button cell according to another embodiment will be described in different points from the button cell according to the above-described embodiment.

FIG. 8 illustrates a cross-sectional view showing a button cell according to another embodiment.

Referring to FIG. 8, a button cell 1003 according to another embodiment includes an electrode assembly 100, a case 200, a cap plate 300, a terminal plate 400, a bonding layer 500, a ring welded portion 600, an annular gasket 700, and an insulating washer 800.

The insulating washer 800 is positioned between the annular gasket 700 and the cap plate 300. The insulation washer 800 is positioned over an entire rear surface of the cap plate 300 positioned opposite to a front surface of the cap plate 300 bonded to the bonding layer 500. The annular gasket 700 is positioned between the insulated washer 800 and the electrode assembly 100 inside the case 200. The insulating washer 800 is positioned between the annular gasket 700 and the annular welded portion 600. The insulation washer 800 may include various known insulation materials such as a polyimide and polypropylene.

As such, in the button cell 1003 according to another embodiment, as the insulation washer 800 and the annular gasket 700 is positioned between the annular weld 600 and the electrode assembly 100 inside the case 200 corresponding to the annular weld 600, melting of the separator 130 of the electrode assembly 100 by welding heat between the case 200 and the cap plate 300 is prevented and a movement of the electrode assembly 100 is suppressed.

In addition, in the button cell 1003 according to another embodiment, as the first extension 710 of the annular gasket 700 is easily bent in the vertical direction by a plurality of cut portions, and when the electrode assembly 100 is accommodated into the case 200 through the opening 210 of the case 200 during a manufacturing process of the button cell 1003, even when the first extension 710 of the annular gasket 700 interferes with the electrode assembly 100, the first extension 710 of the annular gasket 700 is bent along the moving direction of the electrode assembly 100 so that the electrode assembly 100 is easily accommodated inside the case 200 through the opening 210.

In addition, in the button cell 1003 according to another embodiment, as the first extension 710 of the annular gasket 700 is easily bent in the vertical direction, when welding the second electrode tab 150 to the protrusion 420 of the terminal plate 400 during the manufacturing process of the button cell 1003, even when the first extension 710 of the annular gasket 700 interferes with the second electrode tab 150, the first extension 710 of the annular gasket 700 is bent along the moving direction of the second electrode tab 150, so that the second electrode tab 150 is easily welded to the protrusion 420 of the terminal plate 400 through the opening 210.

In addition, in the button cell 1003 according to another embodiment, as the insulation washer 800 is positioned over the entire rear surface of the cap plate 300, a short circuit between the second electrode tab 150 and the cap plate 300 is suppressed.

In addition, in the button cell 1003 according to another embodiment, the second extension 720 of the annular gasket 700 is not only thinner than the first extension 710 and shorter in length than the first extension 710 but also overlaps the first electrode 110, which is an anode, in the direction of one horizontal line HL and does not overlap with the second electrode 120, which is a cathode, in the direction of one horizontal line HL, thereby minimizing decrease in battery capacity due to a space where the annular gasket 700 is positioned.

That is, the button cell 1003 in which it is easy to accommodate the electrode assembly 100 into the case 200 even when including the annular gasket 700 and the insulating washer 800 that not only suppresses melting of the separator 130 of the electrode assembly 100 due to welding heat between the case 200 and the cap plate 300, also suppresses the movement of the electrode assembly 100, and minimizes battery capacity deterioration is provided.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### <Description of Symbols>

Electrode assembly 100, case 200, cap plate 300, terminal plate 400, bonding layer 500, annular welded portion 600, annular gasket 700

## Claims

1. A button cell comprising:
an electrode assembly (100) including a first electrode (110), a second electrode (120), and a separator (130) positioned between the first electrode and the second electrode;
a case (200) connected to the first electrode, and configured to accommodate the electrode assembly and to include an opening exposing the electrode assembly;
a cap plate (300) coupled to the case to cover an outer area of the opening and including a through hole exposing a central area of the opening;
a terminal plate (400) connected to the second electrode, to be insulatively bonded to the cap plate, and to cover the through hole;
an annular welded portion (600) welded between an edge of the cap plate (300) and a sidewall (201) of the case (200); and
an annular gasket (700) positioned inside the case to correspond to the annular welded portion and positioned between the electrode assembly (100) and the edge of the cap plate (300) and between the electrode assembly (100) and a sidewall of the case (200),
wherein the annular gasket (700) includes a plurality of cut portions (730) positioned to be spaced apart from each other along an inner edge of the annular gasket (700).

2. The button cell of claim 1, wherein
each of the cut portions (730) of the annular gasket (700) has a triangular shape in a plan view.

3. The button cell of claim 1 or 2, wherein
the annular gasket (700) further includes:
a first extension (710) positioned between an upper surface of the electrode assembly and the edge of the cap plate; and
a second extension (720) configured to extend from the first extension and positioned between a side surface of the electrode assembly and the sidewall of the case.

4. The button cell of claim 3, wherein
the cut portions (730) are positioned on the first extension (710).

5. The button cell of claim 3 or 4, wherein
the second extension (720) is thinner than the first extension (710).

6. The button cell of any of claims 3 to 5, wherein
the second extension (720) is shorter than the first extension (710).

7. The button cell of any of the preceding claims, wherein
the electrode assembly (100) is wound around one vertical line (VL) to have a jelly roll shape, and
the first electrode protrudes closer to the cap plate (300) than the second electrode in a direction of the one vertical line (VL).

8. The button cell of claim 7, wherein
each of the plurality of the second extensions (720) overlaps the first electrode (110) in a horizontal direction intersecting the one vertical line (VL) and does not overlap the second electrode (120).

9. The button cell of any of the preceding claims, wherein
the first electrode (110) is an anode and the second electrode (120) is a cathode.

10. The button cell of any of the preceding claims, further comprising
an insulating washer (800) positioned between the annular gasket (700) and the cap plate.

11. The button cell of claim 10, wherein
the insulating washer (800) is positioned over an entire rear surface of the cap plate.

12. The button cell of any of the preceding claims, wherein
a bonding layer (500) is disposed between the cap plate and the terminal plate to insulatively bond between the cap plate and the terminal plate.

13. The button cell of claim 12, wherein
the terminal plate (400) includes:
a flange portion (410) configured to cover the through hole and to contact the bonding layer; and
a protrusion (420) configured to penetrate the through hole from the flange portion.

14. The button cell of claim 12 or 13, wherein
the electrode assembly (100) includes:
a first electrode tab configured to extend from the first electrode to be welded to the case; and
a second electrode tab configured to extend from the second electrode to be welded to the protrusion of the terminal plate.

15. The button cell of any of the preceding claims, wherein
the case (200) and the cap plate (300) have the same polarity as that of the first electrode (110), and
the terminal plate (400) has the same polarity as that of the second electrode (120), and/or wherein
a ratio of a height to a diameter of the button cell is 1 or less.
